# EUROPEAN PATENT APPLICATION

(11) **EP 4 407 734 A1**
(43) Date of publication of application: **31.07.2024**
(21) Application number: 22960682.7
(22) Date of filing: 22.12.2022
(51) Int. Cl.: H01M 10/0567, H01M 10/0525, H01M 4/133

(54) **SECONDARY BATTERY AND ELECTRICAL APPARATUS**

(30) Priority: 26.09.2022 CN 202211175108
(71) Applicant: Sunwoda Mobility Energy Technology Co., Ltd., Shenzhen, Guangdong 518107 (CN)
(72) Inventor: LIU, Peng, Shenzhen, Guangdong 518107 (CN); CHEN, Yun, Shenzhen, Guangdong 518107 (CN); LI, Man, Shenzhen, Guangdong 518107 (CN); LV, Guoxian, Shenzhen, Guangdong 518107 (CN); CHU, Chunbo, Shenzhen, Guangdong 518107 (CN)
(74) Representative: Stöckeler, Ferdinand
(86) International application number: PCT/CN2022/141187
(87) International publication number: WO 2024/066087

(57) **Abstract**

A secondary battery and a power consumption device are provided in the present application. The secondary battery includes a positive electrode plate, a negative electrode plate, a separator, and an electrolyte solution. The negative electrode plate has a non-faradaic capacitance Cdl nF satisfying 1≤Cdl≤5. The electrolyte solution includes an additive, and the additive includes a silicon-containing compound. In the present application, by reasonably adjusting the relationship between the non-faradaic capacitance of the negative electrode plate and content of the additive in the electrolyte solution, the secondary battery has characteristics of high capacity and rapid charging.

## Description

This application claims priority to Chinese Patent Application No. 202211175108.5, filed on September 26, 2022, entitled "SECONDARY BATTERY AND POWER CONSUMPTION DEVICE", which is incorporated herein by reference in its entirety.

### TECHNICAL FIELD

The present application relates to the technical field of secondary batteries, and more particularly, to a secondary battery and a power consumption device.

### BACKGROUND

At present, secondary batteries, such as lithium-ion batteries, are increasingly dominant in the field of new energy, and market demand is rapidly increasing year by year. Lithium-ion secondary batteries with high energy density and high voltage have attracted much attention. For example, in order for an electric vehicle to have a short charging time and a long life time, a lithium-ion secondary battery needs to have a fast charging and a high capacity.

Therefore, it is needed to provide a secondary battery to improve the above problem.

### SUMMARY OF THE APPLICATION

### TECHNICAL PROBLEM

The present application provides a secondary battery and a power consumption device, which improve a problem that it is difficult to balance fast charging and high capacity of the secondary battery.

### SOLUTIONS OF THE APPLICATION

### TECHNICAL SOLUTION

The secondary battery according to an embodiment of the present application includes a positive electrode plate, a negative electrode plate, a separator, and an electrolyte solution, wherein a non-faradaic capacitance Cdl nF of the negative electrode plate satisfies: 1≤Cdl≤5, the electrolyte solution includes an additive, and the additive includes a silicon-containing compound.

In an embodiment, the silicon-containing compound includes at least one of tris (trimethylsilane) phosphate, tris (trimethylsilane) phosphite, trimethylfluorosilane, or tris (trimethylsilane) borate.

In an embodiment, the silicon-containing compound has a mass percentage A% satisfying 0.01≤A≤5, based on a total mass of the electrolyte solution.

In an embodiment, the silicon-containing compound has a mass percentage of A% satisfying 0.01≤10×Cdl×A%≤2.5, based on a total mass of the electrolyte solution.

In an embodiment, the negative electrode plate has a compaction density PD g/cm³ satisfying 1.1≤PD≤1.7.

In an embodiment, the negative electrode plate has an OI value ranging from 2 to 25.

In an embodiment, the electrolyte solution has a surface tension F mN/m at room temperature, the surface tension F mN/m satisfies: 20≤F≤40, and the room temperature ranges from 20°C to 25°C.

In an embodiment, the internal resistance R mΩ of the secondary battery satisfies: 0.02≤R≤0.8.

In an embodiment, 1.1≤Cdl+R×F/10≤8.

In an embodiment, the negative electrode plate includes a negative electrode current collector, and a negative electrode active material layer disposed on the negative electrode current collector; the negative electrode active material layer includes negative electrode active material; and the negative electrode active material includes one or more of artificial graphite, natural graphite, amorphous carbon, carbon nanotubes, or mesocarbon microspheres.

The power consumption device according to another embodiment of the present application includes the secondary battery described above.

### BENEFICIAL EFFECT OF THE APPLICATION

### BENEFICIAL EFFECT

The secondary battery according to embodiments of the present application has at least the following technical effects:
(1) in the present application, by adjusting the value of the non-faradaic capacitance Cdl of the negative electrode plate, the non-faradaic process of the negative electrode plate is accelerated, the reaction activity is improved, and the kinetic performance is more perfect; and
(2) by adding a silicon-containing compound additive to the electrolyte solution, it is possible to form a stable passivation film at the positive and negative electrode interface at the same time, thereby reducing the impedance between the electrolyte solution and the interface. In a case that the value of the non-faradaic capacitance Cdl of the negative electrode plate is within the mentioned range, and the silicon-containing compound is added to the electrolyte solution, it is possible to effectively suppress the side reaction between the negative electrode plate and the electrolyte solution. Thus, the reaction between the reactive sites of the negative electrode plate and the electrolyte solution is within a suitable range, and the battery has a fast charging capability to improve the charging window and provide excellent power performance.

### BRIEF DESCRIPTION OF THE DRAWINGS OF THE APPLICATION

### BRIEF DESCRIPTION OF THE DRAWINGS

In order that the technical solution in the embodiments of the present application may be explained more clearly, reference is made briefly to the drawings required for the description of the embodiments. It should be understood that the drawings in the following description are for merely some of the embodiments of the present application, and other drawings may be made to those skilled in the art without involving any inventive effort.

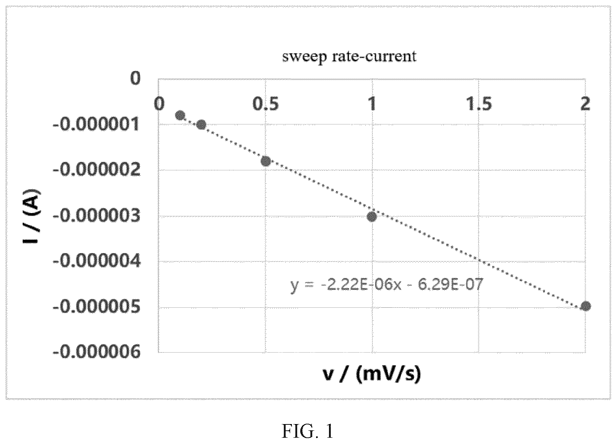

FIG. 1 is a fitting curve of the sweep rate versus current scatter plot of the negative plate prepared in Example 1 of the present application.

### DETAILED DESCRIPTION OF THE EMBODIMENTS

In the following, the technical solutions in the embodiments of the present application are clearly and completely described in connection with the drawings in the embodiments of the present application. It should be understood that the described embodiments are merely a part of the embodiments of the present application, rather than all the embodiments. Based on the embodiments in the present application, all other embodiments obtained by a person skilled in the art without involving any inventive effort are within the protection scope of the present application.

The embodiment of the application provides a secondary battery and a power consumption device. Detailed descriptions are given below. It should be noted that the order in which the following examples are described is not intended to limit the preferred order of the examples.

In the detailed description and claims, a list of items connected by "at least one of" may mean any combination of the listed items. For example, if items A and B are listed, then the phrase "at least one of A and B" means only A, only B, or A and B. In another example, if items A, B and C are listed, then the phrase "at least one of A, B and C" means only A, only B, only C, A and B (excluding C), A and C (excluding B), B and C (excluding A), or all of A, B and C. Item A may have a single element or multiple elements. Item B may have a single element or multiple elements. Item C may have a single element or multiple elements. The term "at least a XXX of" has the same meaning as the term "at least one of".

The term "~" is used in the present specification to indicate a numerical range, a start point of the term "∼" indicates a minimum value in the numerical range, and an end point of the term "∼" indicates a maximum value in the numerical range.

In an embodiment, the present application provides a secondary battery including a positive electrode plate, a negative electrode plate, a separator, and an electrolyte solution.

### I. Negative electrode plate

The negative electrode plate includes a negative electrode current collector, and a negative electrode active material layer disposed on the negative electrode current collector.

In some embodiments of the present application, the negative electrode plate has a non-faradaic capacitance Cdl nF, which satisfies: 1≤Cdl≤5. Currently, in order to satisfy the high energy density of the secondary battery, the coating weight is increased. However, the increasing coating weight affects the long-term reliability of the battery. When a secondary battery, such as a lithium-ion battery, is rapidly charged or discharged at a high rate, if the lithium-ions cannot be quickly inserted or removed in the negative electrode active material, lithium precipitation may be caused. As a result, lithium dendrites may be formed, which may penetrate the polymer microporous separator and cause an internal short circuit. The lithium precipitation of the negative electrode plate consumes lithium-ions in the battery, so that the capacity of the battery decays rapidly, and the cycling performance of the battery deteriorates. Due to the large charge/discharge current, the heat generated due to the internal resistance of the battery also increases, and safety problems such as burning or even explosion may occur due to thermal runaway. In the present application, by adjusting the value of the non-faradaic capacitance Cdl of the negative electrode plate, the non-faradaic process of the negative electrode plate is accelerated, the reaction activity is high, and the kinetic performance is more perfect. The negative electrode plate of the present application has high capacity, high rate performance, and is not easily subjected to side reaction with an electrolyte solution, so that a lithium-ion battery has high durability and cycle stability. The non-faradaic capacitance Cdl of the negative electrode plate can be adjusted by controlling the morphology of the negative electrode active material, the compaction density of the negative electrode plate, the OI value of the negative electrode plate, the formulation composition of the negative electrode plate, and the negative electrode slurry process, thereby controlling the number of reactive sites of the negative electrode plate, and affecting the performance of the battery. By the above-described control method, it is possible to make the non-faradaic capacitance of the negative electrode plate within the above-described range.

Specifically, Cdl may be 1, 1.5, 1.9, 2.2, 2.7, 3.1, 3.4, 3.6, 4.5, and 5, or may range between any two of 1, 1.5, 1.9, 2.2, 2.7, 3.1, 3.4, 3.6, 4.5, and 5. In some embodiments of the present application, 1.5≤Cdl≤4.5. In some embodiments of the present application, 1.9≤Cdl≤3.6. Electrochemical reactions include a change in the oxidation state of the active material, a faradaic reaction in which a charge moves towards the interior of the active material, and a non-faradaic reaction in which ions adsorb, disengage to store, release a charge on the surface of the active material. The faradaic reaction means that the oxidation state of the active material is changed, and the charge is transferred through the double charge layer, to the interior of the active material through the electrode interface. The non-faradaic reaction refers to a reaction in which a charge is stored and released by a physical adsorption of ions on the electrode surface without a charge moving across the electrode interface. With the Cdl in the above range, the non-faradaic process is accelerated, the reaction activity is high, and the kinetic performance is excellent. The prepared lithium-ion battery can be rapidly charged at a high rate, has excellent safety performance, and has excellent cycle performance.

The non-faradaic capacitance of the negative electrode plate can be obtained by testing the negative electrode plate in the overhang region in the secondary battery using the non-faradaic capacitance value testing method. The negative electrode plate in overhang region refers to a portion in which the length and/or width of the negative electrode plate exceeds the positive electrode plate. The non-faradaic capacitance of the negative electrode plate can also be obtained by testing negative electrode plates that are not assembled into batteries.

### Compaction density

In some embodiments of the present application, the negative electrode plate has a compaction density PD g/cm³ which satisfies: 1.1≤PD≤1.7. For example, the compaction density PD g/cm³ may be1.1, 1.2, 1.3, 1.5, 1.6, and 1.7; or may range between any two of 1.1, 1.2, 1.3, 1.5, 1.6, and 1.7. In some embodiments of the present application, 1.3≤PD≤1.6. With the compaction density in the above-mentioned range, the integrity of the negative electrode active material particles is higher, the occurrence of particle breakage after rolling is reduced. Thus, the increase of side reactions in the process of battery cycle is reduced, and the cycle life of the battery is prevented from being affected. At the same time, when the non-faradaic capacitance of the negative electrode plate is 1 nF to 5 nF, and the compaction density is in the above-mentioned range, the electrical contact between the negative electrode active material particles is better, which facilitates lithium-ion migration, increases the current consistency of the negative electrode plate, slows down the polarization of the battery, and also enables the gap between the negative electrode active material particles to be in a suitable range, so that the structure of the negative electrode active material particles is in a relatively complete state, and the electrolyte solution is better in wettability, thereby improving the kinetic performance. When the compaction density of the negative electrode plate is changed, the physical contact between the particles in the negative electrode plate is changed, and the pores between the particles in the negative electrode plate are changed, which affects the non-faradaic capacitance of the negative electrode plate.

### OI value

In some embodiments of the present application, the negative electrode plate has an OI value of 2 to 25. For example, the OI value may be 2, 4, 5, 6, 7, 10, 11, 15, 20, and 25; and may range between any two of 2, 4, 5, 6, 7, 10, 11, 15, 20, and 25. In some embodiments of the present application, the OI value of the negative electrode plate may be 4 to 20. In some embodiments of the present application, the electrode plate OI value of the negative electrode plate may also be 5 to 15. The OI value (C004/C110) of the negative electrode plate can be measured by an XRD technique. The OI value of the negative electrode plate may represent the crystal phase index of the negative electrode active material layer, where C004 is the peak intensity of the 004 characteristic diffraction peak in the X diffraction pattern of the negative electrode active material layer and C110 is the peak intensity of the 110 characteristic diffraction peak in the X diffraction pattern of the negative electrode active material layer. Adjusting the OI value of the negative electrode plate can affect the lithium-ion transmission path. During the lithium insertion process, lithium-ions enter the interlayers from the end face of the graphite of the negative electrode material, and solid-phase diffusion is performed between the interlayers to complete the lithium insertion process. Therefore, the highly isotropic graphite end face is exposed to the surface of the negative electrode plate, thereby shortening the migration path of the lithium-ions, facilitating rapid migration of the lithium-ions, and accelerating electrochemical reaction kinetics, thereby further achieving high-rate lithium-ion discharge performance. In addition, the excellent degree of homogeneity can suppress expansion between graphite layers and improve cycle performance. Therefore, when the OI value falls within the above range, the effects of increasing the rapid charging, reducing the expansion, and improving the cycle can be achieved.

### Non-faradaic capacitance test method

Testing the non-faradaic capacitance of the negative electrode plate includes the steps of:
S1: non-faradaic potential interval determination: assembling a negative electrode plate into a button battery, and performing a cyclic voltammetry test on the button battery to determine a non-faradaic potential interval, wherein the voltage range is 0.005V ~3.0V and the sweep rate is 0.1mV/s~1mV/s;
S2: non-faradaic potential interval negative electrode sweep: selecting the potential interval to perform a linear sweeping voltammetry (LSV) test to obtain a sweep rate-voltage curve, wherein a sweep direction is from a low potential to a high potential, the voltage range is 2.5V ~2.6V, and the sweep rate is 0.05mV/s~5mV/s; and obtaining a current value corresponding to median value U of the potential interval at a certain sweep rate V;
S3: non-faradaic capacitance calculation: according to step S2, acquiring a sweep rate-current scatter plot to fit and obtain a linear function; wherein a slope K of the linear function is the Cdl value of the cathode sweep direction of the negative electrode plate.

Further, the button battery includes a positive electrode casing, a negative electrode plate, a separator, an electrolyte solution, a lithium plate, and a negative electrode casing.

Further, the obtained negative electrode plate is dried and cut into small wafers and weighed, then transferred to a vacuum oven to dry at 90°C~110°C for 7h~9h. Then the dried negative electrode plate is transferred to a glove box filled with Ar for half-cell assembly to obtain a button battery. The step of assembling a button battery is a conventional assembling method in the art.

### Negative electrode current collector

In some embodiments of the present application, the negative electrode current collector includes, but is not limited to, a metal foil, a metal cylinder, a metal tape roll, a metal plate, a metal film, a metal plate mesh, a stamped metal, a foamed metal, and the like. In some embodiments, the negative electrode current collector is a metal foil. In some embodiments, the negative electrode current collector is copper foil. As used herein, the term "copper foil" includes copper alloy foils. In some embodiments, the negative electrode current collector is a conductive resin. In some embodiments, the conductive resin includes a film obtained by evaporating copper on a polypropylene film.

### Negative electrode active material layer

The negative electrode active material layer may be a single-layer structure or a multiple-layer structure, and each layer of negative electrode active material layer may include the same or different negative electrode active materials. The negative electrode active material is any material capable of reversibly inserting and removing metal ions such as lithium-ions. In some embodiments, the rechargeable capacity of the negative electrode active is greater than the discharge capacity of the positive electrode active to prevent lithium metal from precipitating on the negative electrode during charging.

In some embodiments of the present application, the thickness of the negative electrode active material layer refers to the thickness of the negative electrode active material layer coated on a separate side of the negative electrode current collector. In some embodiments, the negative electrode active material layer has a thickness greater than or equal to 15 µm. In some embodiments, the negative electrode active material layer has a thickness greater than or equal to 20 µm. In some embodiments, the negative electrode active material layer has a thickness greater than or equal to 30 µm. In some embodiments, the negative electrode active material layer has a thickness less than or equal to 150 µm. In some embodiments, the negative electrode active material layer has a thickness less than or equal to 120 µm. In some embodiments, the negative electrode active material layer has a thickness less than or equal to 100 µm. In some embodiments, the thickness of the negative electrode active material layer ranges between any two of the above values. With thickness of the negative electrode active material layer in the above-mentioned range, the electrolyte solution may be impregnated in the vicinity of the negative electrode current collector interface, to improve the charge/discharge characteristics of the electrochemical device at high current density. At the same time, the volume ratio of the negative electrode current collector to the negative electrode active material is within a suitable range, to ensure the capacity of the secondary battery.

The negative electrode active material layer includes a negative electrode active material, a conductive agent, a binder, an additive, and a solvent.

### 1. Conductive agent

In some embodiments of the present application, the conductive agent includes one or more of conductive carbon black, conductive graphite, carbon fibers, carbon nanotubes, or graphene.

### 2. Negative electrode active material

In some embodiments of the present application, the negative electrode active includes one or more of artificial graphite, natural graphite, soft carbon, hard carbon, amorphous carbon, carbon nanotubes, or mesophase carbon microspheres.

### 3. Binder

The negative electrode active material layer includes a negative electrode binder that can enhance adhesion between the negative electrode active materials. The type of the binder is not particularly limited, as long as it is stable to the solvent used in the manufacture of the electrolyte solution or the electrode.

### Preparation of negative electrode plate

The negative electrode plate in the secondary battery of the present application may be prepared by any known method. For example, the negative electrode active material, the conductive agent, the binder, the additive, and the solvent may be made into a negative electrode slurry in a certain proportion, and the negative electrode slurry is applied to the negative electrode current collector for rolling to obtain a negative electrode plate.

### II. Electrolyte solution

The electrolyte solution includes a lithium salt, an organic solvent, and an additive including a silicon-containing compound. According to the present application, the relationship between the non-faradaic capacitance of the negative electrode plate and the content of the additive in the electrolyte solution is reasonably adjusted, so that the obtained lithium-ion secondary battery has the characteristic of high-capacity and quick charge.

### Additive

According to the secondary battery of the present application, by adding an additive containing a silicon-containing compound to the electrolyte solution, a stable passivation film can be formed at the positive and negative electrode interfaces at the same time, the resistance between the electrolyte solution and the interface is reduced, and a side reaction between the positive electrode plate or the negative electrode plate and the electrolyte solution is effectively suppressed. In a case that the non-faradaic capacitance of the negative electrode plate is 1nF to 5nF and the electrolyte solution contains a silicon-containing compound, the silicon-containing compound has a single pair of electrons which are nucleophilic and alkaline, to control the HF content, thereby reducing the internal resistance of the battery, and increasing the charge rate. At the same time, the silicon-containing compound can form a film on the negative electrode under the action of the electron-deficient center atom, as such, the ion conductivity of the SEI film is increased, and the transmission of lithium-ions is accelerated. Thus, the battery has a fast charge capability, the lithium precipitation interface is improved, and excellent power performance is provided. In a case that the electrolyte solution of the present application and the negative electrode plate of the present application are applied to a lithium-ion battery, not only can the cycle performance of the lithium-ion battery be improved, but also the rate performance of the lithium-ion battery can be improved.

In some embodiments of the present application, the silicon-containing compound includes at least one of tris (trimethylsilane) phosphate (TMSP), tris (trimethylsilane) phosphite (TMSPi), trimethylfluorosilane, or tris (trimethylsilane) borate (TMSB). The silicon-containing compound can better interact with the negative electrode plate, to form a stable and compactive passivation film on the surface of the negative electrode plate of the lithium-ion battery, thereby effectively suppressing the side reaction of the electrode-the electrolyte solution, reducing the surface tension of the electrolyte solution, and increasing the compatibility of the electrode and the electrolyte solution interface. Thus, the cycle performance of the lithium-ion battery is improved, and the safety of the lithium-ion battery is improved.

In some embodiments of the present application, the mass percentage A% of the silicon-containing compound, based on the total mass of the electrolyte solution, satisfies: 0.01≤A≤5, for example, the A may be 0.01, 0.1, 0.5, 0.7, 1, 1.5, 1.8, 2.2, 2.7, 3, 4, and 5, or may range between any two thereof. In some embodiments of the present application, 0.1≤A≤4. In some embodiments of the present application, 0.5≤A≤3. When the mass percentage of the silicon-containing compound is less than 0.01%, the film-forming ability is insufficient, resulting in a limited improvement on the lithium-ion performance. When the mass percentage of the silicon-containing compound is greater than 5%, the film-forming is too dense, resulting in a decrease in the lithium-ion remove speed, an increase in the polarization, and deterioration of the cycle performance of the lithium-ion battery.

In some embodiments of the present application, the mass percentage A of the silicon-containing compound, based on the total mass of the electrolyte solution satisfies: 0.01≤10×Cdl×A%≤2.5, for example, the A may be 0.02, 0.1, 0.2, 0.3, 0.4, 0.5, 0.6, 0.8, 1.1, and 2.2, or may range between any two thereof. In some embodiments of the present application, 0.02≤10×Cdl×A%≤2.2. In some embodiments of the present application, 0.1≤10×Cdl×A%<1.1.

### Surface tension

In some embodiments of the present application, the surface tension F mN/m of the electrolyte solution at room temperature satisfies: 20≤F≤40, wherein the room temperature is 20°C to 25°C. For example, the F may be 20, 25, 30, 35, and 40; or may range between any two thereof. In some embodiments of the present application, 25≤F≤35. The force acting on the surface of the liquid to reduce the surface area of the liquid is referred as the surface tension of the liquid. The degree of infiltration of the electrolyte solution can affect the performance of the lithium-ion battery, and improved methods include adjusting the solvent system and using additives. With the surface tension of the electrolyte solution in the above range, the infiltration of the electrode plate can be accelerated, the distribution uniformity and the dynamic balance ability of the electrolyte solution can be improved, the infiltration rate can be improved, the battery resistance can be reduced, and the reaction kinetics of the battery can be improved. As such, the lithium-ion battery has good rate performance. The electrolyte solution with the surface tension of the above range provides a good interface for the negative electrode coating, helping to improve the cycle performance of the electrochemical device. In addition, the infiltration time is reduced, and the production efficiency can be improved. The surface tension of the electrolyte solution can be measured by the SY/T 5370-2018 surface and interface tension measurement method. The setting of the measurement includes: total time 10.0 s, start pause 0.0 s, last frame 10% (33FPS), pipette head size 300µL, and drop volume 6µL.

In some embodiments of the present application, 1.1≤Cdl+R×F/10≤8, for example, may be 1.1, 1.5, 2, 3, 5, 7, and 8, or may range between any two thereof. In some embodiments of the present application, 1.5≤Cdl+R×F/10≤6. In some embodiments of the present application, 1.9≤Cdl+R×F/10≤4.5. Win a case that the non-faradaic capacitance of the negative electrode plate, the internal resistance of the secondary battery, and the surface tension of the electrolyte solution meet the above range, the negative electrode plate has high transmission performance of electrons and lithium-ions, so that the battery has high charge and discharge performance at a high rate, and further, the lithium-ion battery has more excellent comprehensive performance.

### Organic solvent

In some embodiments of the present application, the electrolyte solution further includes any organic solvent known in the art as a solvent for the electrolyte solution. In some embodiments, the organic solvent includes a carbonate-based solvent, including at least two of vinyl carbonate, propylene carbonate, dimethyl carbonate, diethyl carbonate, methyl ethyl carbonate, polycarbonate.

### Lithium salt

In some embodiments of the present application, the lithium salt includes at least one of lithium hexafluorophosphate, lithium organoborate, lithium perchlorate, and lithium sulfonimide salt.

The content of the lithium salt is not particularly limited so long as the effect of the present application is not affected. In some embodiments of the present application, the molar concentration of the lithium salt may be 0.5mol/L~2mol/L, 1mol/L~1.8mol/L, or 1.2mol/L~1.5mol/L, based on the total volume of the electrolyte solution. With the molar concentration of the lithium salt in the above range, the lithium-ion as a charged ion is not too few, and the viscosity can be made to be in an appropriate range, so that good conductivity can be easily ensured.

### Additive

In some embodiments of the present application, the additive includes a thiooxy double bond-containing compound, such as 1, 3-propanesultone, vinyl sulfate, vinyl sulfite, and the like.

In some embodiments of the present application, the additive includes an unsaturated double bond-containing cyclic carbonate, such as ethylene carbonate, ethylene vinyl carbonate, and the like.

### III. Positive electrode plate

The positive electrode plate includes a positive electrode current collector, and a positive electrode active material layer disposed on the positive electrode current collector.

### Positive electrode active material layer

The positive electrode active material layer may be a single-layer structure or a multiple-layer structure, and each layer of positive electrode active material layer may include the same or different positive electrode active materials. The positive electrode active material is any material capable of reversibly inserting and removing metal ions such as lithium-ions.

The positive electrode active material layer includes a positive electrode active material, a positive electrode conductive agent, a positive electrode binder, and a solvent.

### 1. Positive electrode active material

The type of the positive electrode active material is not particularly limited as long as the positive electrode active material can absorb and release metal ions (for example, lithium-ions) in an electrochemical manner. In some embodiments of the present application, the positive electrode active includes one or more of lithium iron phosphate (LFP) and ternary material.

In some embodiments of the present application, the positive electrode active includes a ternary material. The ternary material includes lithium nickel cobalt manganese oxide and/or lithium nickel cobalt aluminum oxide.

In some embodiments of the present application, the content of the nickel element is greater than or equal to 0.5, based on the molar amount of the nickel element, the cobalt element, and the manganese element in the lithium nickel cobalt manganese oxide being 1.

In some embodiments of the present application, the content of the nickel element is less than or equal to 0.85, based on the molar amount of the nickel element, the cobalt element, and the manganese element in the lithium nickel cobalt manganese oxide being 1.

In some embodiments of the present application, the positive electrode active material further includes a doping element and/or a coating element.

In some embodiments of the present application, the content of the positive electrode active material may be 80% to 98%, 85% to 96%, or 90% to 95%, based on the weight of the positive electrode active material layer. In some embodiments, the content of the positive electrode active material may range between any two of the above values, based on the weight of the positive electrode active material layer. In a case that the content of the positive electrode active material is within the above range, the capacity of the positive electrode active material in the positive electrode active material layer can be ensured, while the strength of the positive electrode plate can be maintained.

### 2. Positive electrode conductive agent

The type of the positive electrode conductive agent is not limited, and any known conductive agent may be used. Examples of positive electrode conductive agents may include, but are not limited to, carbon materials such as natural graphite, artificial graphite, acetylene black, acicular coke, carbon nanotubes, graphene, and the like. The positive electrode conductive agent may be used alone or in any combination.

### 3. Positive electrode binder

The type of the positive electrode binder used in the production of the positive electrode active material layer is not particularly limited, and in the case of the coating method, a material that is soluble or dispersible in the liquid medium used in the production of the electrode can be used. Examples of positive electrode binder may include, but is not limited to, one or more of resin polymers such as polyethylene, polypropylene, polyethylene terephthalate, polymethyl methacrylate, polyimide, aromatic polyamide, cellulose, nitrocellulose; rubber-like polymers such as styrenebutadiene rubber (SBR), nitrile rubber (NBR), fluorine rubber, isoprene rubber, polybutadiene rubber, and ethylene-propylene rubber; thermoplastic elastomeric polymers such as styrene · butadiene · styrene block copolymer or hydride thereof, ethylene · propylene · diene terpolymer (EPDM), styrene · ethylene · butadiene · ethylene copolymer, styrene · isoprene · styrene block copolymer or hydride thereof; soft resinous polymers such as syndiotactic-1,2-polybutadiene, polyvinyl acetate, ethylene · vinyl acetate copolymer, and propylene ·α-olefin copolymer; fluorine-based polymers such as polyvinylidene fluoride (PVDF), polytetrafluoroethylene, fluorinated polyvinylidene fluoride, and polytetrafluoroethylene · ethylene copolymer; and polymer composition having ionic conductivity of alkali metal ion (especially lithium-ion) and the like. The positive electrode binder described above may be used alone or in any combination.

### 4. Solvent

The type of the solvent used to form the positive electrode paste is not limited, as long as the solvent can dissolve or disperse the positive electrode active material, the positive electrode conductive agent, and the positive electrode binder. Examples of the solvent used to form the positive electrode slurry may include any of an aqueous solvent and an organic solvent. Examples of aqueous media may include, but not limited to, mixed media of water, and alcohol with water, and the like. Examples of organic media may include, but not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine, N, N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide and dimethyl sulfoxide.

### Positive electrode current collector

The type of positive electrode current collector is not particularly limited, and may be any material known to be suitable for use as a positive electrode current collector. Examples of positive electrode current collectors may include, but are not limited to, aluminum, stainless steel, nickel plating, titanium, tantalum, and the like; and carbon materials such as carbon cloth and carbon paper. In some embodiments, the positive electrode current collector is a metal material. In some embodiments, the positive electrode current collector is aluminum. The form of the positive electrode current collector is not particularly limited. In a case that the positive electrode current collector is a metal material, the positive electrode current collector may be in the form of, but is not limited to, a metal foil, a metal cylinder, a metal tape roll, a metal plate, a metal foil, a metal plate mesh, a stamped metal, a foamed metal, and the like. In a case that the positive electrode current collector is a carbon material, the positive electrode current collector may be in a form including, but not limited to, a carbon plate, a carbon thin film, a carbon cylinder, and the like. In some embodiments, the positive electrode current collector is a metal foil. In some embodiments, the metal foil is mesh-shaped. The thickness of the metal foil is not particularly limited. In some embodiments, the thickness of the metal foil is greater than 1 µm, greater than 3 µm, or greater than 5 µm. In some embodiments, the thickness of the metal foil is less than 1 mm, less than 100 µm, or less than 50 µm. In some embodiments, the thickness of the metal foil ranges between any two of the above values.

### IV. Separator

In order to prevent a short circuit, a separator is generally provided between the positive electrode and the negative electrode. The material and shape of the separator are not particularly limited, as long as the effect of the present application is not significantly affected. The separator may be a resin, glass fiber, inorganic material, or the like formed of a material stable to the electrolyte solution of the present application. In some embodiments, the separator includes a porous plate-like or nonwoven fabric-like material having excellent liquid retention properties, and the like. Examples of materials of the resin or glass fiber separator may include, but are not limited to, polyolefins, aromatic polyamides, polytetrafluoroethylene, polyethersulfones, and the like. In some embodiments, the polyolefin is polyethylene or polypropylene. In some embodiments, the polyolefin is polypropylene. The material of the separator described above may be used alone or in any combination.

### Internal resistance of secondary battery

In some embodiments of the present application, the internal resistance R mS2 of the secondary battery satisfies: 0.02≤R≤0.8, for example, the R may be 0.02, 0.05, 0.1, 0.3, 0.5, 0.7, and 0.8, or may range between any two thereof. In some embodiments of the present application, 0.05≤R≤0.7. In some embodiments of the present application, 0.1≤R≤0.5. The internal resistance of the secondary battery can be measured by AC resistance of the electrochemical workstation, wherein the disturbance voltage is 5mV, and the frequency ranges from 100kHz to 100mHz.

### V. Application

An embodiment of the present application further provides a power consumption device including the secondary battery described above.

The power consumption device of the present application is, but is not limited to, a backup power supply, an electric motor, an electric vehicle, an electric motorcycle, a booster bicycle, a bicycle, an electric tool, a large-sized battery for a household, and the like.

The following description is made in connection with examples.

### Example 1.

This example provides a method for preparing a battery including the following steps:
1) preparing a positive electrode plate: mixing a positive electrode active material (NCM811), a positive electrode conductive agent (carbon black), and a positive electrode binder (polyvinylidene fluoride) in a mass percentage of 96: 2: 2; and then mixing a mixture thereof with a solvent to prepare a positive electrode slurry; coating the positive electrode plate slurry uniformly on both sides of a positive electrode current collector aluminum foil; and then drying at 120 °C, rolling, and cutting to obtain a positive electrode plate; wherein the solvent is N-methylpyrrolidone (NMP).
2) preparing a negative electrode plate: uniformly mixing a negative electrode active material, a conductive agent, a binder, and an additive in a mass percentage of 96.5: 1.5: 1.5: 0.5; and then mixing a mixture thereof with solvent deionized water to prepare a negative electrode slurry; stirring the negative electrode slurry by a vacuum stirrer, and coating the negative electrode slurry uniformly on both sides of a negative electrode current collector copper foil; and baking, rolling and cutting the negative electrode current collector copper foil to obtain a negative electrode plate; wherein the negative electrode active material is artificial graphite, the conductive agent is carbon black, the binder is styrene butadiene rubber, and the additive is sodium carboxymethyl cellulose; wherein the baking temperature is 90°C to 110°C, the compacted density of the rolling is controlled at 1.55g/cm³, and the OI value of the negative electrode plate is 6.5. By controlling the morphology, the stirring process, the rolling condition, and the like of the negative electrode active material in the negative electrode plate, it is possible to realize the non-faradaic capacitance of the negative electrode plate shown in Table 1.
3) preparing electrolyte solution: mixing ethylene carbonate (EC), methyl ethyl carbonate (EMC), and diethyl carbonate (EDC) at a mass percentage of 3:4:3, adding 0.1% of tris (trimethylsilane) phosphate and 1% of vinylene carbonate, and then adding 1 mol/L of LiPF₆ to prepare an electrolyte solution, wherein the surface tension of the electrolyte solution is 35 mN/m.
4) preparing a lithium-ion battery: drying the negative electrode plate and the positive electrode plate prepared in the above steps, winding the negative electrode plate and the positive electrode plate together with a separator to form a battery core, and placing the battery core into a casing, and performing a liquid injection, formation, and capacity grade to obtain a lithium-ion battery, wherein the separator is a PP separator;
5) testing non-faradaic capacitance value test: step 1: disassembling a lithium-ion battery in a glove box or a drying room to obtain an overhang area electrode plate of a negative electrode, soaking the overhang area electrode plate with a dimethyl carbonate (DMC) solution, cutting the overhang area electrode plate, and assembling the overhang area electrode plate into a button half-battery with the lithium metal plate; or providing a unassembled negative electrode plate, cutting the negative electrode plate, and assembling the negative electrode plate into a button half-battery with the lithium metal plate; step 2: performing a CV test with voltage ranging from 0.005V to 3.0V, 0.1mV/s of sweep rate, and 2.5V to 2.6V of non-faradaic potential interval on the button battery; step 3: performing a LSV when the voltage ranges from 2.6V to 2.5V, wherein the sweep rates are 0.1mV/s, 0.2mV/s, 0.5mV/s, 1mV/s, 2mV/s, respectively, and obtaining current values -7.87E-07A, -9.94E-07A, -1.80E-06A, -3.03E-06A, -4.99E-06A corresponding to a median value 2.55V of the potential interval; step 4: plotting a sweep-current scatter plot and fitting a linear function. As shown in FIG. 1, the slope of the linear function is -2.22E-06, this is, the cathode sweep direction Cdl of the negative electrode plate is 2.22 nF.

The parameters of the battery prepared in this example are provided as following. The compaction density of the negative electrode plate after rolling is 1.55g/cm³, and the OI value of the electrode plate is 6.5. 0.1% tris (trimethylsilane) phosphate is added to the electrolyte solution to prepare an electrolyte solution, and the surface tension of the electrolyte solution is 35mN/m. The non-faradaic capacitance of the lithium-ion battery is 2.22.

### Examples 2 to 20

Lithium-ion batteries are prepared according to the method of Example 1, except that the following differences are shown in Table 1.

### Comparative Example 1

A lithium-ion battery is prepared according to the method of Example 1, except the following.

The compaction density of the negative electrode plate after rolling is 1.05g/cm³, and the OI value of the electrode plate is 20. No additive is added to the electrolyte solution, and the surface tension of the electrolyte solution is 45mN/m. The non-faradaic capacitance of the lithium-ion battery is 0.8.

### Comparative Example 2

A lithium-ion battery is prepared according to the method of Example 1, except the following.

The compaction density of the negative electrode plate after rolling is 1.3g/cm³, and the OI value of the electrode plate is 27. 5.5% of tris (trimethylsilane) phosphate is added to the electrolyte solution to prepare an electrolyte solution, and the surface tension of the electrolyte solution is 15mN/m. The non-faradaic capacitance of the lithium-ion battery is 5.3.

The Cdl value in Examples 1 to 20 and Comparative Example 1 to 2 can be changed by controlling the morphology of the negative electrode active material, the compaction density of the negative electrode plate, and the OI value of the negative electrode plate, provided that the Cdl value can be in the range described in the present application.

The battery obtained in Examples 1 to 20 and Comparative Example 1 to 2 is subjected to a kinetic performance test, the test method includes the following.

The lithium-ion battery is stood for 30 minutes at 25°C, and then fully charged at 5C and stood for 30 minutes, and then fully discharged at 1C and stood for 10 minutes. After 10 cycles of the charges and discharges, the lithium-ion battery is fully charged at 5C and stood for 10 minutes, meanwhile stopping the cycles of the charges and discharges. The lithium-ion battery is disassembled, to observe the interface condition of the surface of the negative electrode plate, and record the area of the portion of the lithium precipitation. Percentage of the area of the lithium precipitation = the area of the portion of the lithium precipitation/the total area of the negative electrode plate ×100%. The degree of lithium precipitation is defined as non-precipitation, slight precipitation, moderate precipitation, and severe precipitation. The non-precipitation indicates that the region in which lithium is precipitated on the surface of the negative electrode plate is less than 3%; the slight precipitation indicates that the region in which lithium is precipitated on the surface of the negative electrode plate is greater than or equal to 3%, but less than 20% of the overall region; the moderate lithium precipitation indicates that the region in which lithium is precipitated on the surface of the negative electrode plate is 20%~ 70% of the overall region, and the severe lithium precipitation indicates that the region in which lithium is precipitated on the surface of the negative electrode plate is less than 3% exceeds 70% of the overall region.

### Cyclic performance test method

The secondary battery is stood for 30 minutes at 25°C, discharged at 1C with constant current and stood for 10 min, and then charged at 1C with constant current and constant voltage and stood for 10 min, and subjected to a cycle of full charge and discharge test. The capacity retention rates of 2000 cycles are recorded.

### Surface tension of electrolyte solution test method

The test for the surface tension of the electrolyte solution refers to the SY/T 5370-2018 surface and interface tension test method.

### Internal resistance of battery test method

The lithium-ion battery is stood at for 30 minutes at 25°C, charged at 1C with constant current and constant voltage, and then discharged at a capacity of 1C for 30 minutes. SOC is adjusted to 50%, the lithium-ion battery is subjected to an alternating-current resistance test at an electrochemical workstation, wherein the disturbance voltage is 5mV, and the frequency ranges from 100kHz to100mHz.

The test results are shown in the following table.

**Table 1**

| | Cdl | Type of additive | Content A of additive | 10×Cdl× A% | compacti on density PD | surface tension F | OI value | internal resistance R of battery | 5C kinetic performa nce | cycle performa nce (%) |
|---|---|---|---|---|---|---|---|---|---|---|
| Example 1 | 222 | tris (trimethylsilane) phosphate | 0.1 | 0.0222 | 1.55 | 35 | 6.5 | 0.05 | non-precipita tion | 91.2 |
| Example 2 | 222 | tris (trimethylsilane) phosphate | 0.5 | 0.111 | 1.55 | 36 | 6.5 | 0.08 | non-precipita tion | 91.4 |
| Example 3 | 222 | tris (trimethylsilane) phosphate | 0.7 | 0.155 | 1.55 | 35 | 6.5 | 0.1 | non-precipita tion | 90.8 |
| Example 4 | 222 | tris (trimethylsilane) phosphate | 1 | 0.222 | 1.55 | 35 | 6.5 | 0.12 | non-precipita tion | 90.6 |
| Example 5 | 222 | tris (trimethylsilane) phosphate | 1.5 | 0.333 | 1.55 | 33 | 6.5 | 0.15 | non-precipita tion | 91.4 |
| Example 6 | 222 | tris (trimethylsilane) phosphate | 1.8 | 3.96 | 1.55 | 35 | 6.5 | 0.16 | non-precipita tion | 91.5 |
| Example 7 | 222 | tris (trimethylsilane) phosphate | 2.2 | 0.488 | 1.55 | 34 | 6.5 | 0.2 | non-precipita tion | 90.0 |
| Example 8 | 222 | tris (trimethylsilane) phosphate | 2.7 | 0.599 | 1.55 | 36 | 6.5 | 0.25 | non-precipita tion | 89.5 |
| Example 9 | 222 | tris (trimethylsilane) phosphate | 3 | 0.666 | 1.55 | 35 | 6.5 | 0.3 | non-precipita tion | 91.3 |
| Example 10 | 222 | tris (trimethylsilane) phosphate | 4 | 0.888 | 1.55 | 33 | 6.5 | 0.5 | non-precipita tion | 90.6 |
| Example 11 | 222 | tris (trimethylsilane) phosphate | 5 | 1.110 | 1.55 | 33 | 6.5 | 0.6 | non-precipita tion | 87.1 |
| Example 12 | 1 | tris (trimethylsilane) phosphate | 1 | 0.1 | 1.1 | 35 | 25 | 0.08 | slight precipit ation | 86.2 |
| Example 13 | 1.57 | tris (trimethylsilane) phosphate | 1 | 0.157 | 1.3 | 35 | 20 | 0.1 | non-precipita tion | 90.7 |
| Example 14 | 1.95 | tris (trimethylsilane) phosphate | 1 | 0.098 | 1.5 | 34 | 15 | 0.12 | non-precipita tion | 91.4 |
| Example 15 | 2.74 | tris (trimethylsilane) phosphate | 1 | 0.192 | 1.6 | 35 | 11 | 0.14 | non-precipita tion | 89.9 |
| Example 16 | 3.12 | tris (trimethylsilane) phosphate | 1 | 0.312 | 1.62 | 35 | 10 | 0.15 | non-precipita tion | 88.4 |
| Example 17 | 3.63 | tris (trimethylsilane) phosphate | 1 | 0.545 | 1.65 | 33 | 7 | 0.14 | non-precipita tion | 89.6 |
| Example 18 | 3.41 | tris (trimethylsilane) phosphate | 1 | 0.614 | 1.68 | 35 | 5 | 0.14 | non-precipita tion | 90.7 |
| Example 19 | 4.55 | tris (trimethylsilane) phosphite | 5 | 2.275 | 1.1 | 25 | 4 | 0.48 | non-precipita tion | 88.6 |
| Example 20 | 5 | tris (trimethylsilane) phosphite | 0.01 | 0.005 | 1.7 | 25 | 2 | 0.7 | slight precipit ation | 86.9 |
| Comparat ive Example 1 | 0.8 | - | - | - | 1.05 | 45 | 20 | 1 | severe precipit ation | 68.2 |
| Comparat ive Example 2 | 5.3 | tris (trimethylsilane) phosphate | 5.5 | 3.025 | 1.3 | 15 | 27 | 0.9 | severe precipit ation | 70.4 |

From the results in the table, it can be seen that Comparative Example 1 is that no silicon-containing compound is added to the electrolyte solution and the non-faradaic capacitance is lower than the range of the present application, and Comparative Example 2 is that an excess of silicon-containing compound is added to the electrolyte solution and the non-faradaic capacitance is higher than the range of the present application, which illustrates that the Examples with adding the silicon-containing compound in the range of the present application to the electrolyte solution and the non-faradaic capacitance value within the range of the present application, and the battery kinetic performance is preferable.

The battery cycle performance of the Examples is significantly improved compared to the Comparative Examples. Comparative Example 1 is that no silicon-containing compound is added to the electrolyte solution and the non-faradaic capacitance is lower than the range of the present application, and Comparative Example 2 is that an excess of silicon-containing compound is added to the electrolyte solution and the non-faradaic capacitance is higher than the range of the present application, which illustrates that the Examples with adding the silicon-containing compound in the range of the present application to the electrolyte solution and the non-faradaic capacitance value within the range of the present application, and the battery kinetic performance is excellent.

The present application provides a secondary battery capable of rapidly charging at a large rate, and having high capacity and excellent cycle performance.

The foregoing describes in detail a secondary battery and a power consumption device provided in the present application, and the principles and embodiments of the present application are described herein using embodiments and examples. The description of the above embodiments and examples is merely provided to help to understand the method of the present application and the core concepts thereof. At the same time, variations will occur to those skilled in the art in both the detailed description and the scope of application in accordance with the teachings of the present application. In view of the foregoing, the present description should not be construed as limiting the application.

## Claims

1. A secondary battery, comprising a positive electrode plate, a negative electrode plate, a separator, and an electrolyte solution, wherein a non-faradaic capacitance Cdl nF of the negative electrode plate satisfies: 1≤Cdl≤5, the electrolyte solution comprises an additive, and the additive comprises a silicon-containing compound.

2. The secondary battery of claim 1, wherein the silicon-containing compound comprises at least one of tris (trimethylsilane) phosphate, tris (trimethylsilane) phosphite, trimethylfluorosilane, or tris (trimethylsilane) borate.

3. The secondary battery of any one of claims 1 to 2, wherein the silicon-containing compound has a mass percentage A% satisfying: 0.01≤A≤5, based on a total mass of the electrolyte solution.

4. The secondary battery of any one of claims 1 to 3, wherein the silicon-containing compound has a mass percentage of A% based on a total mass of the electrolyte solution, and the secondary battery satisfies: 0.01≤10×Cdl×A%≤2.5.

5. The secondary battery of any one of claims 1 to 4, wherein the negative electrode plate has a compaction density PD g/cm³ satisfying: 1.1≤PD≤1.7.

6. The secondary battery of any one of claims 1 to 5, wherein the negative electrode plate has an OI value ranging from 2 to 25.

7. The secondary battery of any one of claims 1 to 6, wherein the electrolyte solution has a surface tension F mN/m at room temperature, the surface tension F mN/m satisfies: 20≤F≤40, and the room temperature ranges from 20°C to 25°C.

8. The secondary battery of any one of claims 1 to 7, wherein the internal resistance R mΩ of the secondary battery satisfies: 0.02≤R≤0.8.

9. The secondary battery of any one of claims 1 to 8, wherein a surface tension F mN/m of the electrolyte solution at room temperature and an internal resistance R mΩ of the secondary battery satisfy: 1.1≤Cdl+R×F/10≤8.

10. The secondary battery of any one of claims 1 to 9, wherein the negative electrode plate comprises a negative electrode current collector, and a negative electrode active material layer disposed on the negative electrode current collector; the negative electrode active material layer comprises negative electrode active material; and the negative electrode active material comprises one or more of artificial graphite, natural graphite, amorphous carbon, carbon nanotubes, or mesocarbon microspheres.

11. A power consumption device, comprising the secondary battery of any one of claims 1 to 10.
